# EUROPÄISCHE PATENTSCHRIFT

(11) **EP 2 476 563 B1**
(45) Veröffentlichungstag und Bekanntmachung des Hinweises auf die Patenterteilung: **11.09.2019**
(21) Anmeldenummer: 12150123.3
(22) Anmeldetag: 04.01.2012
(51) Int. Cl.: B60C 7/12, B60C 7/22, B60C 11/01, B60C 7/10

(54) **Vollreifen**
Solid tyre
Pneu plein

(30) Priorität: 13.01.2011 DE 102011008529
(43) Veröffentlichungstag der Anmeldung: 18.07.2012
(73) Patentinhaber: BTS Befestigungselemente-Technik und Vertrieb Gesellschaft m.b.H., 5020 Salzburg (AT)
(72) Erfinder: Sawatzki, Günter, 8385 Neuhaus (AT)
(74) Vertreter: Puchberger & Partner Patentanwälte

(56) Entgegenhaltungen:
- EP-A1- 0 251 922
- DE-C- 855 810
- GB-A- 879 525
- US-A- 4 362 202
- US-A1- 2003 024 622
- US-B1- 6 431 235

## Beschreibung

Die Erfindung betrifft einen Vollreifen für Kleinfahrzeuge mit einer profilierten Lauffläche und einer Reifenflanke, wobei zwischen der Lauffläche und der Reifenflanke zumindest eine die Lauffläche verbreiternde umlaufende Schulter vorgesehen ist.

Für Kleinfahrzeuge wie insbesondere Schubkarren, Golfcaddies, Kinderwägen oder dergleichen sind Vollreifen bekannt, welche eine profilierte Lauffläche und eine, mit der Felge in Kontakt stehende Reifenflanke aufweisen. Vollreifen haben im Vergleich zu herkömmlichen Luftreifen den Vorteil höherer Robustheit.

Der Ausdruck Vollreifen bezeichnet in diesem Zusammenhang mehr oder weniger massive Reifen, die im Gegensatz zu Luftreifen keine unter Druck stehende Luft oder andere unter Druck stehende Gase enthalten, sondern ihre stoßdämpfenden bzw. federnden Eigenschaften aufgrund ihrer Herstellung aus einem mehr oder weniger elastischen Material beziehen.

Beispielsweise haben übliche Vollreifen für Schubkarren die Maße 400 x 100 mm bzw. 350 x 100 mm. Die Auflagefläche auf dem Untergrund wird also durch die Breite von 100 mm bestimmt. In der Regel verfügen diese Reifen über eine halbkreisförmige Lauffläche. Diese drückt sich jedoch leicht in weiche Untergründe hinein. Ein Fahren auf weichem Untergrund wird dadurch stark erschwert. Ein entsprechendes Laufrad für Schubkarren ist beispielsweise aus der DE 200 02 656 U1 bekannt.

Bei Luftreifen kann dieses Problem dadurch behoben werden, dass man die Luft etwas entweichen lässt, um eine größere Auflagefläche zu erhalten. Dies ist nur teilweise hilfreich, da der Reifen dadurch "schwimmt" und sich bei höheren Lasten nicht gut kontrollieren lässt. Auf der Baustelle ist es auch nicht einfach, den richtigen Luftdruck einzustellen.

An einem Arbeitstag wechseln die Gewichte und Untergründe mehrfach. Ein zu niedriger Luftdruck kann auch die Felge schädigen, wenn man damit über Kanten fährt.

Aus diesem Grund wäre es vorteilhaft, Breitreifen mit einer breiteren, wenig oder gar nicht gewölbten Lauffläche zu verwenden. Dies ist jedoch aufgrund der vorgegebenen Geometrie der Gabel der Schubkarre ausgeschlossen, da sich ein Breitreifen nicht in die vorgegebene Gabel einführen lässt. Weiters hat die Verbreiterung eines Vollreifens eine deutlich höhere Gewichtszunahme zur Folge, als dies beispielsweise bei einem Luftreifen der Fall wäre. Weiters steht man bei einem als Breitreifen ausgeführten Vollreifen mit wenig gewölbter Lauffläche vor dem Problem, dass Kurvenfahrten erschwert werden, da aufgrund der unterschiedlichen Wölbung eine Kante existiert, die sich in einer geneigten Kurvenfahrt in den Untergrund eindrückt. Aus der US 4,362,202 A ist ein Vollreifen bekannt. Dieser weist eine Schulter auf, um die Lauffläche des Reifens zu erhöhen. Die Schulter weist jedoch gerade die oben genannten Nachteile auf und ist nicht für Kurvenfahrten auf weichen Untergründen geeignet.

Reifen gemäß dem Oberbegriff des unabhängigen Patentanspruchs sind aus der US 2003/024622 A1, sowie aus der DE 855 810 C bekannt. Die bekannten Reifen weisen ebenfalls die vorgenannten Nachteile auf, wobei insbesondere Probleme bei Kurvenfahrten bestehen.

Die technische Aufgabe der vorliegenden Erfindung liegt demnach darin, einen verbesserten Vollreifen zu schaffen, der ein Fahren auf weichem Untergrund erleichtert und sich insbesondere auch bei Kurvenfahrten nicht in den Untergrund eindrückt. Der Vollreifen soll ohne übermäßigen zusätzlichen Materialverbrauch herstellbar sein und muss auf bestehende Gabeln von Arbeitsfahrzeugen montierbar sein.

Diese technische Aufgabe wird erfindungsgemäß bei einem Vollreifen gemäß Oberbegriff des Anspruchs 1 dadurch gelöst, dass die Breite des Vollreifens im Bereich der Schulter, also im Wesentlichen die Breite der den Boden berührenden Lauffläche, um zumindest 30% größer ist als die Breite des Vollreifens an der breitesten Stelle der Reifenflanke.

Indem nicht der gesamte Reifen verbreitert wird, sondern nur im Bereich der Lauffläche eine Schulter mit den erfindungsgemäßen Merkmalen vorgesehen ist, erreicht man den Vorteil einer größeren Auflagefläche, ohne den Nachteil eines wesentlich erhöhten Gewichts bzw. Materialverbrauchs in Kauf nehmen zu müssen. Darüber hinaus erlaubt die erfindungsgemäße Realisierung des Vollreifens mit erfindungsgemäßen Schultern auch, den Vollreifen auf bestehende Gabeln zu montieren, indem der Vollreifen in die Gabel eingefädelt wird.

Gegebenenfalls ist die Breite des Vollreifens im Bereich der Schulter, also im Wesentlichen die Breite der den Boden berührenden Lauffläche, um zumindest 30% größer als die Breite des Vollreifens im Bereich der Reifenflanke. Bei einem üblichen Schubkarrenreifen bedeutet dies, dass die Breite der Lauffläche von 100mm auf 130mm oder mehr erhöht werden kann.

Erfindungsgemäß ist vorgesehen dass die Schulter eine spitzwinkelige Auswölbung bilden kann. Dazu kann vorgesehen sein, dass die Außenfläche der Schulter mit einer Mittelebene des Vollreifens einen ersten Winkel einschließt, der größer als etwa 30° ist, und mit der Lauffläche einen zweiten Winkel einschließt, der kleiner als etwa 30° ist. Die Erfindung ist jedoch nicht auf die Einhaltung dieser Winkelangaben beschränkt.

Erfindungsgemäß kann die Lauffläche entlang ihrer Breite eine Rundung mit weniger als 2° aufweisen. Dadurch entsteht eine breite Auflagefläche, die nicht wie ein Keil in den Untergrund drückt. Insbesondere kann vorgesehen sein, dass die Lauffläche entlang ihrer Breite keine Rundung aufweist.

Durch die Ausführung des Vollreifens mit Schultern, wodurch die Lauffläche breiter ist als die Reifenflanke, wird erreicht, dass man mit diesem Reifen leicht um Kurven fahren kann. Der Reifen wird aufgrund der Schultern zu den Kanten seiner Lauffläche weicher (da weniger abstützendes Material vorhanden ist), und gibt somit in Kurven nach. Diese Weichheit ist besonders auf weichen Rasenflächen von Vorteil, da keine tiefen Laufspuren auftreten.

Ein weiterer Vorteil ist die Montierbarkeit an Karren, die über eine Gabel verfügen. Hier muss der Reifen durch die Holme geführt und eingespannt werden. Dies wäre nicht möglich, wenn die Reifenflanke die gleiche Breite wie die Mantelfläche besitzt. Meist beträgt die Achsweite 75 - 100 mm. Die Reifenflanke ist ca. 65 - 70 mm breit und verfügt so über die Breite der Felge. Erst kurz vor dem Rand steigt die Breite auf 130 mm. Durch Kippen kann der Reifen schräg zwischen die Gabel geführt werden. In schwierigen Fällen geben die weichen Schultern noch ein wenig nach. Auf diese Weise lässt sich der Reifen auf den meisten gängigen Profischubkarren einsetzen.

Die geringe Profiltiefe und deren Gestaltung verhindern zusätzlich eine Beschädigung des Rasens. Es ist dennoch möglich, durch Matsch und Schnee zu fahren. Dies wird insbesondere ermöglicht, wenn die Reifen Rillenprofile in Laufrichtung aufweisen. Durch die geringe Profiltiefe setzen sich auch keine kleinen Steine fest.

Eine breite Mantelfläche mit schaler Reifenflanke wirkt sich in der Produktion positiv aus.

Hier kann erheblich Material eingespart werden, was zu kürzeren Produktionszeiten führt. Auch das Gewicht ist gegenüber einem gleichdicken Breitenreifen geringer.

Eine weitere erfindungsgemäße Ausgestaltung des Reifens ergibt sich, wenn der Reifen direkt auf die Felge geschäumt wird. Dadurch entsteht zwischen Schaum und Felge eine feste Verbindung. Der Reifen kann nicht mehr auf der Felge wandern. Das Schieben wird effektiver und es entstehen keine lästigen Knarrgeräusche. Entsprechend erstreckt sich die Erfindung auf ein Laufrad mit einer Felge und einem erfindungsgemäßen Vollreifen, wobei der Vollreifen direkt auf die Felge aufgeschäumt, bzw. mit der Felge direkt in einem Spritzvorgang gefertigt ist.

Um das Gewicht weiter zu verringern, kann der Reifen mit einem hohlen aber dichten und druckstabilen Innenring versehen werden. Dieser wird anfangs um die Felge gelegt und dann mit dem Reifenmaterial umschäumt. Je nach Durchmesser der Einlage und variieren der Schaumfestigkeit, kann der Reifen auf verschiedene Härten abgestimmt werden. Durch die Einlage erhält der Reifen eine stabile und feste Reifenflanke kombiniert mit einer weichen Mantelfläche.
Der erfindungsgemäße Vollreifen kann also einen hohlen, luftdichten und druckstabilen Innenring umfassen. Der Durchmesser, das Material und die Druckfestigkeit des Innenrings kann vorzugsweise an das Anwendungsgebiet angepasst sein. Insbesondere kann der Innenring als flexibler profilierter Kunststoffschlauch ausgeführt sein.

Es kann erfindungsgemäß vorgesehen sein, dass eine dünne feste Außenschicht von etwa 1 - 2 mm mit einem über den sonst ganzen Querschnitt weicheren Kern vorgesehen ist. Es kann weiters vorgesehen sein, dass zusätzlich ein harter Kern gebildet wird. Zusammen mit handelsüblichen Felgen entstehen so Variationsmöglichkeiten, die mit einer Felge für Niederquerschnittsreifen nicht möglich sind. Zumal ist dieses Vorgehen wirtschaftlicher, da hier das Werkzeug auf einen Felgendurchmesser beschränkt bleibt und nur unterschiedliche Innenringe eingelegt werden können. Der Härtegrad des Kunststoffkerns (Shore-Härte) kann dem jeweiligen Anwendungsgebiet angepasst sein.

Die Innenringe können aus kostengünstiger Schlauchware hergestellt werden. Durch eine Konstruktion ähnlich der menschlichen Wirbelsäule lässt sich das Material zu Ringen formen und an den Stoßstellen durch geeignete Verfahren dicht verbinden. Bekannt sich solche Schläuche z. B. aus der Elektroinstallation. In dieser Branche dient die Schlauchware als flexibler Kabelschutz. Durch die Wirbelsäulenstruktur wird der Schaum beim Fertigungsprozess regelrecht mit der Schlauchware verzahnt.

Erfindungsgemäß kann der Vollreifen einen weichen Kunststoffkern und eine harte Kunststoffaußenschicht umfassen. Der Kunststoffkern und/oder die Kunststoffaußenschicht können zumindest teilweise aus Polyurethanschaum gefertigt sein. Dadurch wird der Reifen gestützt, sodass die Schaummasse weich eingestellt, aber die Reifenflanke (der Kern) des Reifens steif bleiben kann.

Dies kann durch Kabel, Schläuche oder Drähte erreicht werden. Diese können durch ein Draht- bzw. Kunststoffgestell gehalten werden, welches sich innen in der Felge abstützt. Derartige Einlagen sind flexibel und stellen sich nach Auslenkung wieder in ihre ursprüngliche Form. Das haltende Gestell kann so gestaltet sein, dass die Einlagen nach einer Verformung wieder in die Ausgangslage wandern können.

Eine andere erfindungsgemäße Ausgestaltung stellt eine Gewebeeinlage dar. Vorzugsweise wird diese aus zwei Teilen bestehen, die durch einen vorherigen Umformprozess herstellt werden. Auch hier reagiert das Material flexibel und stellt sich nach Verformung mit dem Schaum zurück.

Entsprechend kann der Kunststoffkern ein Gestell aus Draht oder Kunststoff mit stabilisierenden Kabeln, Schläuchen oder Drähten umfassen. Alternativ kann der Kunststoffkern eine stabilisierende Gewebeeinlage umfassen.

Weitere erfindungsgemäße Merkmale sind der Beschreibung, den Zeichnungen und den Ansprüchen zu entnehmen.

Die Erfindung wird nun anhand von Ausführungsbeispielen in den folgenden Figuren näher beschrieben. Es zeigen
- Fig. 1:: einen schematischen Querschnitt durch eine erfindungsgemäße Ausführungsform des Vollreifens;
- Fig. 2:: eine schematische Ansicht eines erfindungsgemäßen Innenrings:
- Fig. 3a-3b:: eine schematische Aufsicht auf ein erfindungsgemäßes Ausführungsbeispiel des Vollreifens bei der Montage an einer Gabel:
- Fig. 4:: einen schematischen Querschnitt durch eine weitere erfindungsgemäße Ausführungsform des Vollreifens;
- Fig. 5:: einen schematischen Querschnitt durch eine weitere erfindungsgemäße Ausführungsform des Vollreifens.

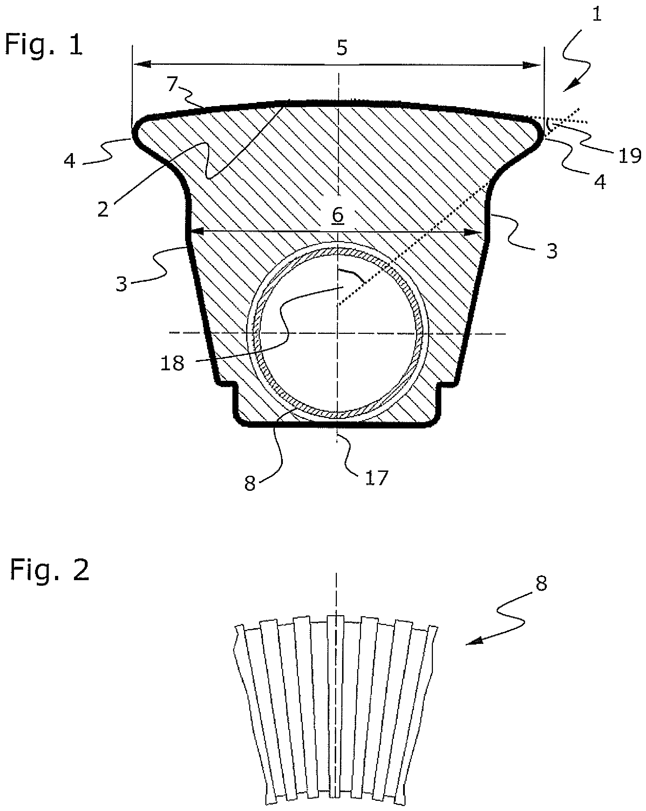

Fig. 1 zeigt einen schematischen Querschnitt durch eine erfindungsgemäße Ausführungsform des Vollreifens 1. Der Vollreifen 1 umfasst eine Lauffläche 2 und eine Reifenflanke 3. Zwischen der Lauffläche 2 und der Reifenflanke 3 sind auf beiden Seiten des Vollreifens 1 die Schultern 4 vorgesehen. Durch diese Schultern 4 ist die Breite 5 im Bereich der Schulter 4 deutlich höher als die Breite 6 im Bereich der Reifenflanke 3.

Weiters ist ersichtlich, dass die Außenfläche der Schulter 4 mit einer Mittelebene 17 des Vollreifens 1 einen ersten Winkel 18 einschließt, der größer als 30° ist, und mit der Lauffläche 2 einen zweiten Winkel 19 einschließt, der kleiner als 30° ist.

Die Lauffläche 2 weist entlang ihrer Breite eine Rundung 7 auf, die jedoch deutlich geringer ist als bei herkömmlichen Vollreifen. Im gegenständlichen Ausführungsbeispiel beträgt die Rundung 7 weniger als 2°. Dadurch wird erreicht, dass die Auflagefläche des Reifens wesentlich höher ist als bei einem herkömmlichen Vollreifen.

Weiters verfügt der Vollreifen 1 über den Innenring 8. Dieser ist aus einem steifen Material gefertigt und erlaubt eine deutliche Materialeinsparung und Gewichtsreduktion.

Fig. 2 zeigt eine Aufsicht auf den erfindungsgemäßen Innenring 8. Dieser ist biegsam, aber druckstabil. Aus diesem Grund ist er mit einer Profilierung 16 versehen, wie dies beispielsweise aus Schläuchen für Elektroinstallationen bekannt ist. Die Profilierung sorgt auch für eine gute Verbindung des Innenrings 8 mit dem Material des Vollreifens 1.

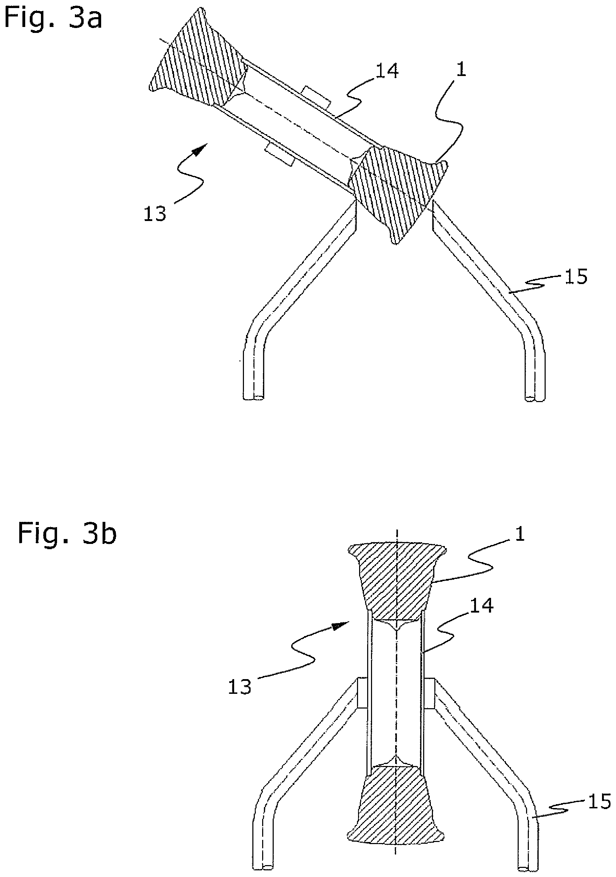

Die Figuren 3a und 3b zeigen den Montagevorgang eines erfindungsgemäßen Vollreifens 1, der auf einer Felge 14 montiert ist, wodurch das Laufrad 13 gebildet ist, auf einer Gabel 15 eines Fahrzeugs. Aufgrund der Form der Schultern 4 kann das Laufrad 13 in die Gabel eingefädelt werden, obwohl die Lauffläche 2 deutlich breiter ist als die Aussparung der Gabel 15.

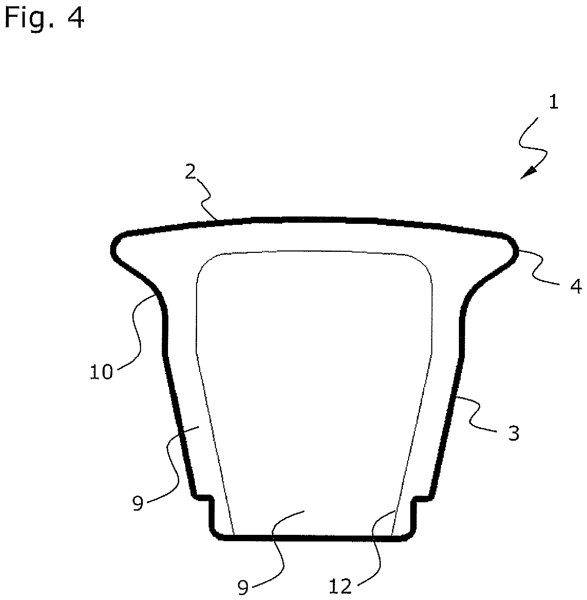

Fig. 4 zeigt einen schematischen Querschnitt durch eine weitere erfindungsgemäße Ausführungsform des Vollreifens 1. Der Vollreifen 1 umfasst einen weichen Kunststoffkern 9 und eine harte Kunststoffaußenschicht 10. Im Inneren des Kunststoffkerns 9 befindet sich eine stabilisierende Gewebeeinlage 12. Die Gewebeeinlage 12 ist vom Kunststoffkern 9 durchdrungen.

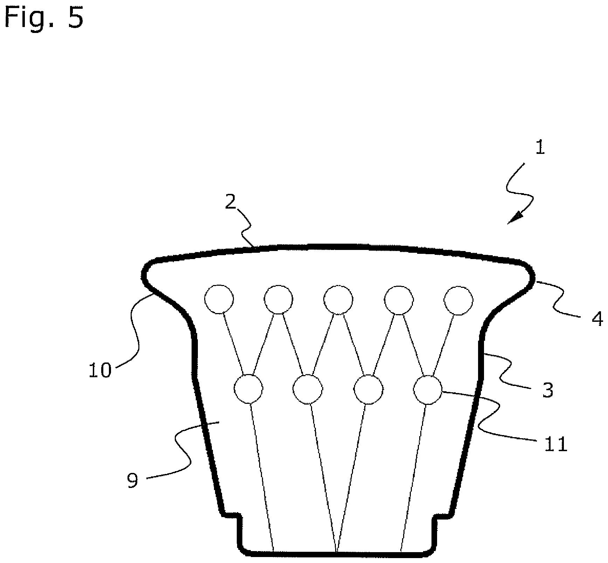

Fig. 5 zeigt einen schematischen Querschnitt durch eine weitere erfindungsgemäße Ausführungsform des Vollreifens 1. Der Vollreifen 1 umfasst einen weichen Kunststoffkern 9 und eine harte Kunststoffaußenschicht 10. Im Inneren des Kunststoffkerns 9 befindet sich ein stabilisierendes Gestell 11, beispielsweise ein Draht- oder Kunststoffgestell. Das Gestell 11 ist vom Kunststoffkern durchdrungen.

Die Erfindung bezieht sich sowohl auf den erfindungsgemäßen Vollreifen, als auch auf ein Laufrad welches einen erfindungsgemäßen Vollreifen umfasst. Dabei ist die Verbindung des Vollreifens mit der Felge des Laufrads unerheblich, der Vollreifen kann beispielsweise auf die Felge aufgesteckt, aufgeschraubt, oder aufgespritzt sein. Weiters erstreckt sich die Erfindung auch auf ein einstückiges Laufrad, bei welchem die Felge und der Vollreifen in einem Arbeitsgang gefertigt wird.

### Bezugszeichenliste

- 1: Vollreifen
- 2: Lauffläche
- 3: Reifenflanke
- 4: Schulter
- 5: Breite des Vollreifens im Bereich der Schulter
- 6: Breite des Vollreifens im Bereich der Reifenflanke
- 7: Rundung
- 8: Innenring
- 9: Kunststoffkern
- 10: Kunststoffaußenschicht
- 11: Gestell
- 12: Gewebeeinlage
- 13: Laufrad
- 14: Felge
- 15: Gabel
- 16: Profilierung
- 17: Mittelebene

## Patentansprüche

1. Vollreifen (1) für Kleinfahrzeuge mit einer profilierten Lauffläche (2) und einer Reifenflanke (3), wobei zwischen der Lauffläche (2) und der Reifenflanke (3) zumindest eine die Lauffläche (2) verbreiternde umlaufende Schulter (4) vorgesehen ist, wobei die Schulter (4) in ihrem radialen Querschnitt einen ersten abgerundeten Bereich und einen zweiten im Wesentlichen linearen Bereich aufweist, wobei der zweite Bereich mit der Mittelebene (17) des Vollreifens (1) einen Winkel einschließt, der größer als 30° ist, **dadurch gekennzeichnet, dass** die Breite (5) des Vollreifens (1) im Bereich der Schulter (4) um zumindest 30% größer ist als die Breite (6) des Vollreifens (1) an der breitesten Stelle der Reifenflanke (3).

2. Vollreifen (1) nach Anspruch 1, **dadurch gekennzeichnet, dass** die Lauffläche (2) entlang ihrer Breite eine Rundung (7) mit weniger als 2° oder keine Rundung aufweist

3. Vollreifen (1) nach einem der Ansprüche 1 oder 2, **dadurch gekennzeichnet, dass** die Außenfläche der Schulter (4) mit einer Mittelebene (17) des Vollreifens (1) einen ersten Winkel (18) einschließt, der größer als 30° ist, und mit der Lauffläche (2) einen zweiten Winkel (19) einschließt, der kleiner als 30° ist.

4. Laufrad (13) mit einer Felge (14) und einem Vollreifen (1) gemäß einem der Ansprüche 1 bis 3.

5. Laufrad (13) mit einer Felge (14) und einem Vollreifen (1) gemäß einem der Ansprüche 1 bis 4, **dadurch gekennzeichnet, dass** der Vollreifen (1) direkt auf die Felge (14) geschäumt ist.

## Claims

1. A solid tyre (1) for small vehicles, having a profiled tread (2) and a tyre flank (3), there being between the tread (2) and the tyre flank (3) at least one circumferential shoulder (4) which widens the tread (2), the shoulder (4) having in radial cross-section a first, rounded region and a second, substantially linear region, the second region forming an angle of more than 30° with the centre plane (17) of the solid tyre (1),
**characterised in that**
the width (5) of the solid tyre (1) in the region of the shoulder (4) is at least 30% greater than the width (6) of the solid tyre (1) at the widest point of the tyre flank (3).

2. The solid tyre (1) according to Claim 1,
**characterised in that**
the tread (2) has a curvature (7) of less than 2° or no curvature along its width.

3. The solid tyre (1) according to one of Claims 1 or 2,
**characterised in that**
the outer face of the shoulder (4) forms a first angle (18) of more than 30° with a centre plane (17) of the solid tyre (1) and a second angle (19) of less than 30° with the tread (2).

4. A wheel (13) having a rim (14) and a solid tyre (1) according to any one of Claims 1 to 3.

5. A wheel (13) having a rim (14) and a solid tyre (1) according to any one of Claims 1 to 4,
**characterised in that**
the solid tyre (1) is foamed directly onto the rim (14) .

## Revendications

1. Bandage plein (1) pour des petits véhicules, avec une surface de roulement profilée (2) et un flanc de bandage (3), dans lequel il est prévu au moins un épaulement circonférentiel (4) élargissant la surface de roulement (2) entre la surface de roulement (2) et le flanc de bandage (3), dans lequel l'épaulement (4) présente une première région arrondie et une deuxième région essentiellement linéaire dans sa section transversale radiale, dans lequel la deuxième région inclut un angle supérieur à 30° avec le plan médian (17) du bandage plein (1), **caractérisé en ce que** la largeur (5) du bandage plein (1) dans la région de l'épaulement (4) est supérieur d'au moins 30° à la largeur (6) du bandage plein (1) à l'endroit le plus large du flanc de bandage (3).

2. Bandage plein (1) selon la revendication 1, **caractérisé en ce que** la surface de roulement (2) présente un arrondi (7) de moins de 2° ou ne présente aucun arrondi le long de sa largeur.

3. Bandage plein (1) selon l'une des revendications 1 ou 2, **caractérisé en ce que** la surface extérieure de l'épaulement (4) inclut un premier angle (18) supérieur à 30° avec un plan médian (17) du bandage plein (1) et un deuxième angle (19) inférieur à 30° avec la surface de roulement (2).

4. Roue (13) avec une jante (14) et un bandage plein (1) selon l'une des revendications 1 à 3.

5. Roue (13) avec une jante (14) et un bandage plein (1) selon l'une des revendications 1 à 4, **caractérisée en ce que** le bandage plein (1) est expansé directement sur la jante (14).
